# DEMANDE DE BREVET EUROPEEN

(11) **EP 2 216 610 A1**
(43) Date de publication de la demande: **11.08.2010**
(21) Numéro de dépôt: 10356008.2
(22) Date de dépôt: 04.02.2010
(51) Int. Cl.: F24H 9/20, G01F 23/22

(54) **Capteur thermosensible pour ballon de stockage d'eau chaude**

(30) Priorité: 06.02.2009 FR 0900509
(71) Demandeur: Cotherm, 38470 Vinay (FR)
(72) Inventeur: Monneron, Cedric, 69100 Villeurbanne (FR)
(74) Mandataire: Schmitt, John

(57) **Abrégé**

Le dispositif de détection suivant la présente invention comprend un capteur thermosensible (10) qui est constitué d'un circuit électrique souple (15) recevant sur l'une de ses faces des éléments thermosensibles (16) raccordés par l'intermédiaire de fils ou pistes électriques (17) à un connecteur (18), et d'une résine isolante et étanche (19) enveloppant lesdits éléments thermosensibles (16) et lesdits fils ou pistes électriques (17).

## Description

La présente invention est relative à un dispositif de détection et son procédé permettant de mesurer la quantité d'eau chaude restante dans un ballon de stockage et plus particulièrement dans un ballon d'eau chaude sanitaire.

On connaît d'après les brevets d'invention FR 2 828 279 et EP 1 281 940 un dispositif de détection de ce genre comportant un tube capillaire pourvu de moyens d'amplification constitués de serpentins ou de renflements bulbaires contenant un fluide susceptible de se dilater en fonction de la quantité d'eau chaude contenue dans le chauffe-eau, et des moyens de transformation de la variation volumique en un signal visuel indiquant la quantité d'eau chaude présente dans le chauffe eau.

A ce jour, la mesure de température s'effectue en un point donné dans le chauffe-eau ou ballon de stockage par l'intermédiaire de thermostats mécaniques. Ainsi, la mesure de température n'est donc pas linéaire (pas d'intégration sur la hauteur de la cuve), il est donc impossible de connaître la température moyenne de l'eau stockée.

Dans le cas d'une prise de température mécanique ou électronique portant sur un seul point à l'intérieur de la cuve (doigt de gant), le système de mesure peut être perturbé par la présence de calcaire ou de limon se formant dans le temps.

Egalement, aucun dispositif de détection connu ne permet de connaître exactement le volume ou la quantité d'eau chaude disponible dans un chauffe-eau traditionnel ou cuve de stockage. De ce fait, la totalité du volume d'eau contenu dans le ballon est chauffée à une température de consigne maximum. Cela entraîne un gaspillage énergétique en cas de non utilisation immédiate de l'eau ainsi chauffée.

Pour améliorer le fonctionnement d'un chauffe-eau traditionnel ou cuve de stockage et connaître exactement le volume ou la quantité d'eau chaude disponible, il est nécessaire de détecter plusieurs paramètres :
- La température d'eau moyenne stockée ;
- La quantité d'eau chaude restante ;
- Les sous-tirages.

Ainsi, le dispositif de détection a pour but, à partir des mesures réalisées, de renseigner une électronique de régulation capable d'optimiser par la suite les séquences de chauffe en fonction du profil d'utilisation du ballon de stockage.

D'autre part, le dispositif de détection doit pouvoir s'adapter et s'insérer dans le processus de fabrication des chauffe-eau traditionnels ou cuves de stockage sans que ces derniers ne soient modifiés dans leur structure.

A cet effet, on connaît d'après la demande de brevet d'invention EP 2017587 appartenant au demandeur un dispositif de détection comportant un tube capillaire contenant un fluide caloporteur qui est placé soit à l'intérieur, soit à l'extérieur de la cuve du chauffe-eau, et un dispositif indicateur raccordé audit tube capillaire, ledit dispositif indicateur comportant un dispositif d'amplification permettant de transmettre, sous l'effet de la dilation du fluide contenu dans le tube capillaire, soit un mouvement à un organe, soit une variation de résistance à une carte électronique de mesure, de manière à indiquer en continu la quantité d'eau chaude disponible restant dans la cuve du chauffe-eau.

Le dispositif de détection suivant la présente invention a pour objet de perfectionner celui décrit et protégé dans la demande de brevet d'invention EP 2017587 appartenant au demandeur en remplaçant plus particulièrement le tube capillaire contenant le fluide caloporteur par un capteur thermosensible.

L'objet de la présente invention consiste en un dispositif de détection et son procédé pour mesurer la quantité d'eau chaude restante à l'intérieur d'un ballon de stockage et plus particulièrement à l'intérieur d'une cuve d'un chauffe-eau.

Le dispositif de détection suivant la présente invention comprend un capteur thermosensible qui est constitué d'un circuit électrique souple recevant sur l'une de ses faces des éléments thermosensibles raccordés par l'intermédiaire de fils ou pistes électriques à un connecteur de liaison, et d'une résine isolante et étanche enveloppant lesdits éléments thermosensibles et lesdits fils électriques.

Le dispositif de détection suivant la présente invention comprend un capteur thermosensible qui est constitué d'un circuit électrique souple recevant sur l'une de ses faces des éléments thermosensibles raccordés par l'intermédiaire de fils ou pistes électriques à un connecteur de liaison, et d'une résine isolante et étanche enveloppant lesdits éléments thermosensibles et lesdits fils ou pistes électriques, ledit connecteur de liaison du capteur thermosensible étant raccordé à une carte électronique de régulation.

Le dispositif de détection suivant la présente invention comprend les éléments thermosensibles sont des éléments à coefficient de température négatif (CTN) ou à coefficient de température positif (CTP) dont la résistance ohmique varie en fonction de la température régnant à l'intérieur de la cuve du chauffe-eau ou ballon de stockage.

Le dispositif de détection suivant la présente invention comprend des éléments thermosensibles qui sont agencés et raccordés par les fils ou pistes électriques au connecteur de liaison, suivant un montage en parallèle.

Le dispositif de détection suivant la présente invention comprend des éléments thermosensibles qui sont agencés et raccordés par les fils ou pistes électriques au connecteur de liaison, suivant un montage indépendant.

Le dispositif de détection suivant la présente invention comprend des éléments thermosensibles qui sont agencés et raccordés par les fils ou pistes électriques au connecteur de liaison, suivant un montage en série.

Le dispositif de détection suivant la présente invention comprend un nombre d'éléments thermosensibles répartis sur le circuit électrique souple qui est fonction de la hauteur de la cuve du chauffe-eau ou ballon de stockage.

Le dispositif de détection suivant la présente invention comprend un circuit électrique souple du capteur thermosensible qui comporte sur son autre face, opposée à celle recevant les éléments thermosensibles et les fils de connexion ou pistes électriques, un film autocollant permettant la fixation du capteur thermosensible.

Le dispositif de détection suivant la présente invention comprend un capteur thermosensible qui est placé à l'extérieur de la cuve et collé contre et sur toute la hauteur de la face externe et verticale de ladite cuve de manière à être noyé dans l'isolant thermique.

Le dispositif de détection suivant la présente invention comprend un capteur thermosensible qui est placé à l'extérieur de la cuve et à l'intérieur d'un tube vertical disposé contre la face externe de ladite cuve.

Le dispositif de détection suivant la présente invention comprend un capteur thermosensible qui peut être placé à l'intérieur de la cuve au moyen d'un tube vertical étanche et traversant ladite cuve.

Le procédé de mesure de la quantité d'eau chaude restante à l'intérieur d'un ballon de stockage et plus particulièrement à l'intérieur d'une cuve d'un chauffe-eau suivant la présente invention consiste :
- à raccorder le connecteur de liaison du capteur thermosensible à une carte électronique de régulation,
- à déterminer la température d'eau moyenne stockée dans la cuve du chauffe-eau ou ballon de stockage,
- à calculer la quantité d'eau chaude restante dans la cuve du chauffe-eau ou ballon de stockage,
- à détecter les sous-tirages d'eau à l'intérieur de la cuve du chauffe-eau ou ballon de stockage.
- Et à déterminer un profil d'utilisation ou de consommation de l'eau chaude.

Le procédé de mesure de la quantité d'eau chaude restante à l'intérieur d'un ballon de stockage et plus particulièrement à l'intérieur d'une cuve d'un chauffe-eau suivant la présente invention consiste, lorsque les éléments thermosensibles sont montés électriquement en parallèle ou en série et raccordés par le connecteur de liaison à la carte électronique de régulation, à réaliser une lecture de la valeur moyenne d'une résistance formée par l'ensemble des éléments thermosensibles.

Le procédé de mesure de la quantité d'eau chaude restante à l'intérieur d'un ballon de stockage et plus particulièrement à l'intérieur d'une cuve d'un chauffe-eau suivant la présente invention consiste, lorsque les éléments thermosensibles sont montés électriquement de façon indépendante et raccordés par la connecteur de liaison à la carte électronique de régulation, à réaliser une lecture ponctuelle de chaque élément thermosensible afin de renseigner l'électronique de régulation associée.

La description qui va suivre en regard des dessins annexés, donnés à titre d'exemples non limitatifs, permettra de mieux comprendre l'invention, les caractéristiques qu'elle présente et les avantages qu'elle est susceptible de procurer :
Figures 1 à 3 sont des vues illustrant un dispositif de détection à capteur thermosensible pour mesurer la quantité d'eau chaude restante dans un ballon de stockage suivant la présente invention.
Figures 4 à 6 sont des vues représentant en détail le capteur thermosensible pour mesurer la quantité d'eau chaude restante dans un ballon de stockage suivant la présente invention.
Figures 7 à 9 sont des vues montrant des montages électriques différents et possibles du capteur thermosensible suivant la présente invention.

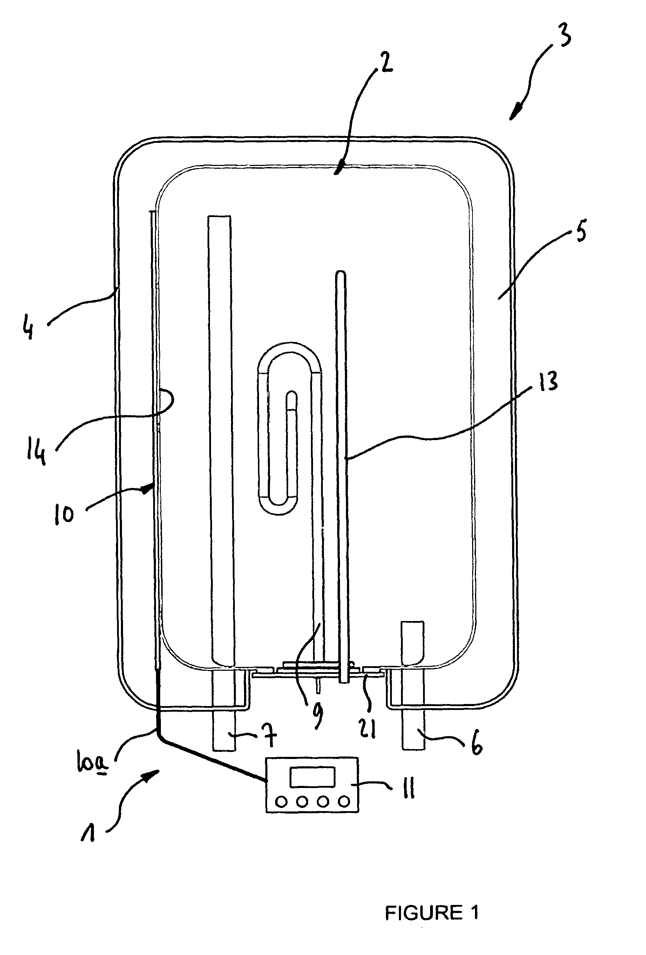

On a représenté en figures 1 à 3 un dispositif de détection 1 pour mesurer la quantité d'eau chaude restante à l'intérieur d'un ballon de stockage et plus particulièrement à l'intérieur d'une cuve 2 d'un chauffe-eau 3.

Le chauffe-eau 3 est constitué d'une enveloppe extérieure 4 à l'intérieur de laquelle est disposée la cuve 2. Le chauffe-eau 3 comporte entre l'enveloppe extérieure 4 et la cuve 2 un isolant thermique 5.

Le chauffe-eau 3 comprend une entrée d'eau froide 6 et une sortie d'eau chaude 7 permettant le remplissage et l'extraction de l'eau contenue à l'intérieur de la cuve 2.

Le chauffe-eau 3 comporte, à l'intérieur de la cuve 2, un doigt de gant 8 recevant dans sa partie interne une résistance électrique chauffante 9, éventuellement une anode de protection en magnésium ou en titane, cet ensemble constituant une bride 21.

Le dispositif de détection 1 suivant la présente invention est constitué d'un capteur thermosensible 10 disposé à l'intérieur du chauffe-eau 3 et relié par des moyens de connexion 10a à un boîtier ou une carte électronique de régulation 11.

La carte de régulation 11 peut être placée à l'extérieur du chauffe-eau 3 et relié au capteur thermosensible 10 par tout moyen de communication radio, infrarouge, courant porteur ou à l'intérieur du chauffe-eau 3 c'est à dire contre l'enveloppe externe 4 pour analyser et stocker les mesures effectuées par ledit capteur thermosensible 10, en ce qui concerne plus particulièrement la quantité d'eau chaude restante à l'intérieur de la cuve 2.

Ainsi, le capteur thermosensible 10 peut être placé à l'extérieur de la cuve 2, et collé contre et sur toute la hauteur de la face externe et verticale 14 de ladite cuve de manière à être noyé dans l'isolant thermique 5. Le capteur thermosensible 10 est raccordé au boîtier ou à la carte électronique de régulation 11 par l'intermédiaire des moyens de connexion 10a qui traversent le fond de l'enveloppe externe 4 du chauffe-eau 3 (Figure 1).

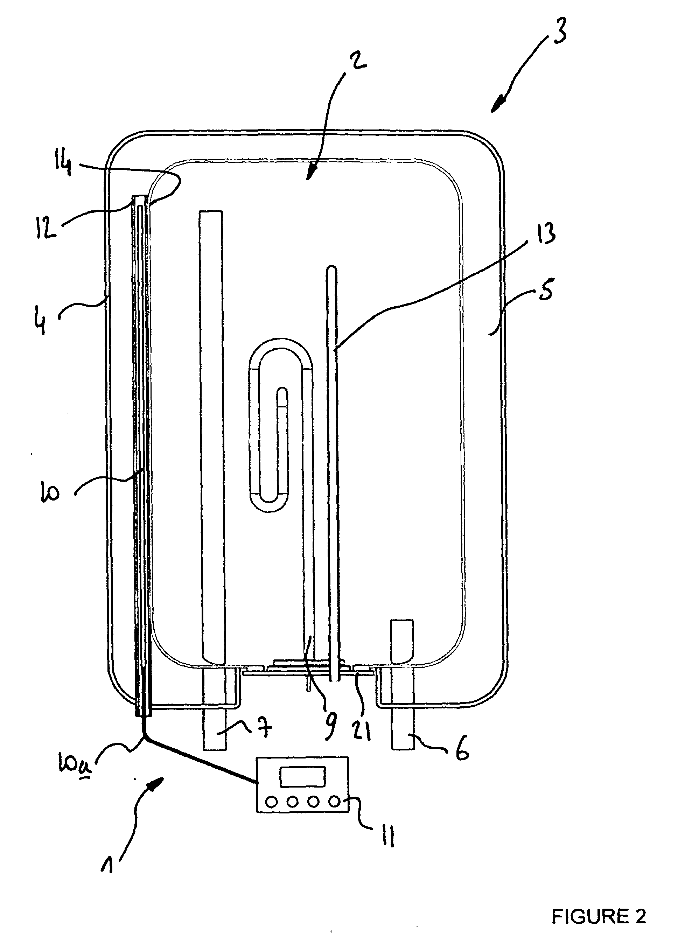

Selon une première variante, le capteur thermosensible 10 peut être placé à l'extérieur de la cuve 2 et à l'intérieur d'un tube vertical 12 formant un doigt de gant. Ce dernier est fixé contre la face externe 14 de la cuve 2 et recouvert de l'isolant thermique 5. Le tube vertical 12 est prévu par exemple pour traverser le fond de l'enveloppe externe 4 du chauffe-eau 3 pour permettre la mise en place et le retrait du capteur thermosensible 10 (Figure 2). Le tube vertical 12 peut être agencé de toute autre manière pour permettre la connexion du capteur thermosensible 3 à la carte électronique de régulation 11, sans pour cela changer l'objet de la présente invention.

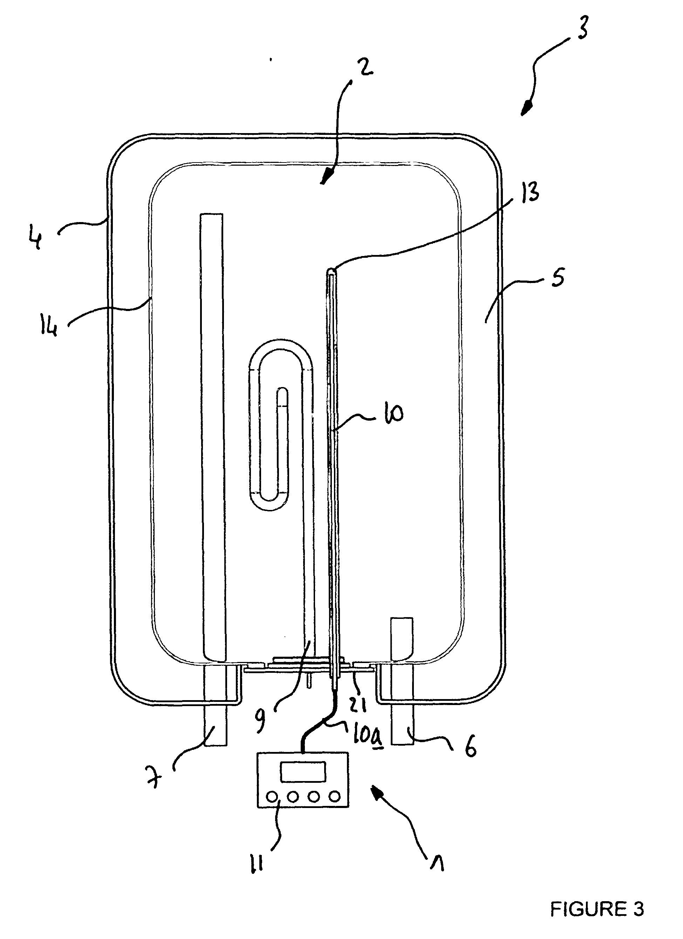

Selon une seconde variante, le capteur thermosensible 10 peut être placé à l'intérieur de la cuve 2 au moyen d'un tube vertical 13 formant un doigt de gant étanche. Le tube vertical 13 est solidaire de la bride 21 fixée sur la cuve 2, ledit tube traversant ladite bride 21 pour permettre la mise en place ou le retrait du capteur thermosensible 10 (Figure 3).

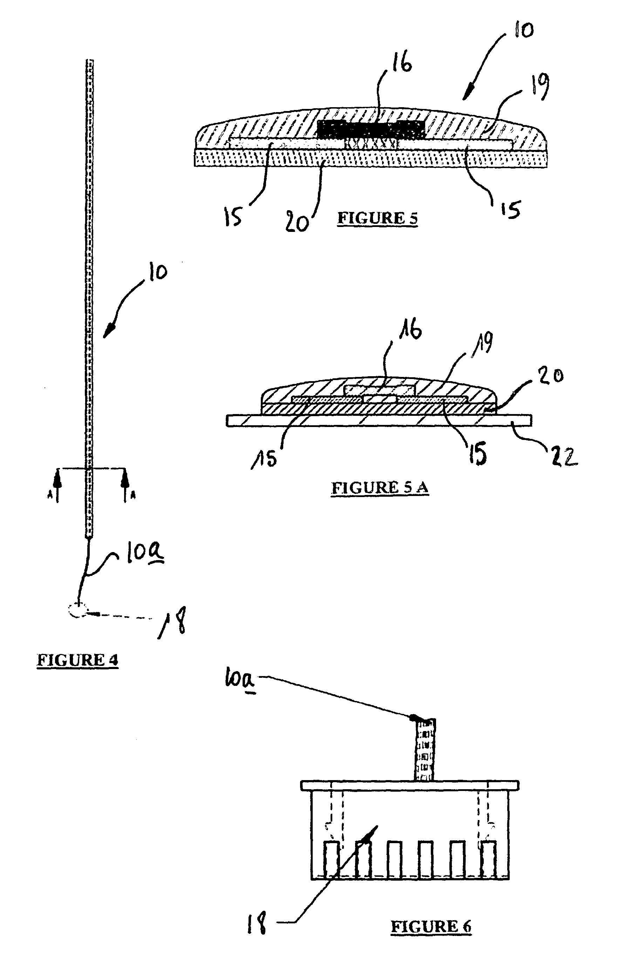

On a montré en figures 4 à 6 le capteur thermosensible 10 qui est constitué d'un circuit électrique souple 15 recevant sur l'une de ses faces des éléments thermosensibles 16 à coefficient de température négatif (CTN) ou à coefficient de température positif (CTP) dont la résistance ohmique varie en fonction de la température régnant à l'intérieur de la cuve 2 du chauffe-eau 3 ou ballon de stockage.

Le nombre d'éléments thermosensibles 16 répartis sur le circuit électrique souple 15 est fonction de la hauteur de la cuve 2 du chauffe-eau 3 ou ballon de stockage.

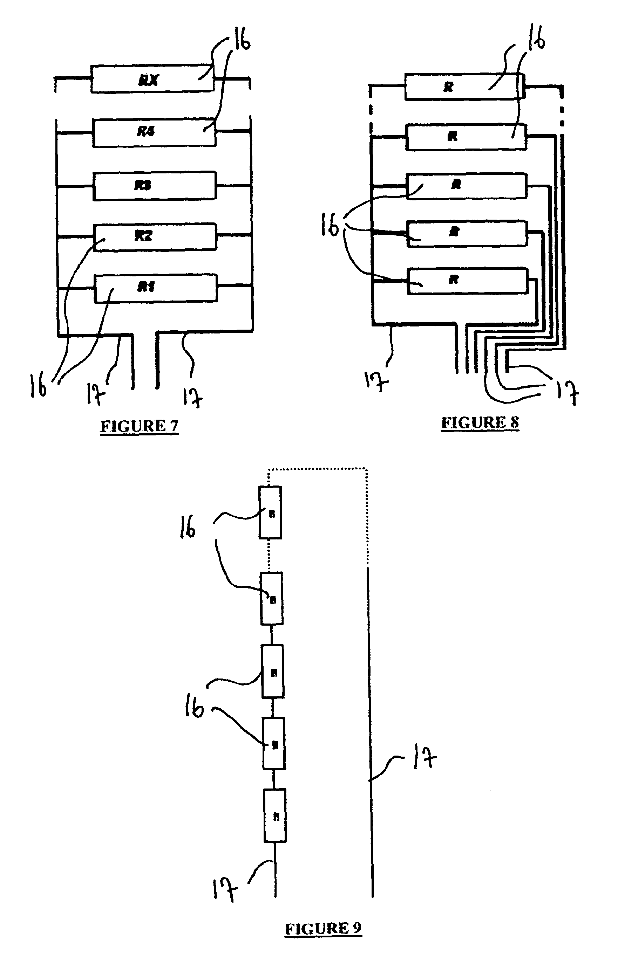

Les éléments thermosensibles 16 sont agencés sur le circuit électrique souple 15 à espaces réguliers et reliés par des fils ou pistes électriques 17 agencés pour réaliser soit un montage électrique en parallèle (Figure 7), soit un montage électrique indépendant (Figure 8), soit un montage électrique en série (Figure 9),

Les fils ou pistes électriques 17 solidaires des éléments thermosensibles 16 sont raccordés à l'une des extrémités du capteur thermosensible 10 par des moyens de connexion 10a, à un connecteur de liaison 18 permettant le raccordement au boîtier ou à la carte électronique de régulation 11 du dispositif de détection 1 pour permettre suivant le type de montage différents traitements du signal à savoir :
- Sortie à deux fils constituant un montage en parallèle des éléments thermosensibles 16 pour réaliser une lecture de la valeur moyenne d'une résistance formée un élément thermosensible (Figures 7 et 9),
- Sortie à plusieurs fils constituant un montage des éléments thermosensibles indépendants 16 pour réaliser une lecture ponctuelle de chaque élément thermosensible 16 afin de renseigner au mieux l'électronique de régulation 11 associée (Figure 8).

Le circuit électrique souple 15, les éléments thermosensibles 16 et les fils ou pistes de connexion ou pistes électriques 17 sont noyés dans une résine isolante et étanche 19 assurant une protection des éléments thermosensibles 16 contre les projections d'eau ou de tout fluide susceptible de perturber les mesures (figures 5 et 5A).

Le circuit électrique souple 15 peut comporter sur son autre face, opposée à celle recevant les éléments thermosensibles 16 et les fils ou pistes de connexion 17, un film autocollant 20 permettant la fixation du capteur thermosensible 10 directement sur la face externe 14 de la cuve 2 du chauffe-eau 3 ou ballon de stockage favorisant un excellent échange thermique.

Selon une variante, le film autocollant 20 permet par exemple la fixation du capteur thermosensible 10 sur une bande d'acier ou feuillard 22 donnant une certaine rigidité ou raideur audit capteur thermosensible 10. Cette semi rigidité du capteur thermosensible 10 permet d'assurer une tenue dudit capteur facilitant son introduction à l'intérieur du tube vertical ou doigt gant 12, 13 que peut comprendre le chauffe eau 3 (figure 2 et 5A).

Dans le cas ou le tube vertical ou doigt de gant 12 se trouve à l'extérieur de la cuve 2 du chauffe eau 3 le capteur thermosensible 10 est introduit à l'intérieur dudit tube vertical ou doigt de gant 12 de manière que la bande d'acier ou feuillard 22 soit tourné(e) du coté de ladite cuve 2 pour pouvoir conduire la chaleur au niveau des éléments thermosensibles 16.

Egalement, le capteur thermosensible 10 peut comporter au niveau de sa terminaison un détrompeur non représenté permettant de placer ledit capteur toujours dans la même position lors de son introduction dans le tube vertical ou doigt gant 12, 13.

On note que la précision des mesures peut être augmentée par le nombre d'éléments thermosensibles 16 disposés sur la bande souple 15 du capteur thermosensible 10.

Ainsi, le capteur thermosensible 10 suivant la présente invention permet de connaître au moyen de la carte électronique de régulation 11 au moins trois paramètres importants, à savoir :
- La température d'eau moyenne stockée dans la cuve 2 du chauffe-eau 3 ou ballon de stockage,
- La quantité d'eau chaude restante dans la cuve 2 du chauffe-eau 3 ou ballon de stockage,
- La détection des sous-tirages d'eau à l'intérieur de la cuve 2 du chauffe-eau 3 ou ballon de stockage.
- Et d'en déduire un profil de consommation et d'utilisation de l'eau chaude.

La présente invention consiste également en un procédé de mesure de la quantité d'eau chaude restante à l'intérieur d'un ballon de stockage et plus particulièrement à l'intérieur d'une cuve 2 d'un chauffe-eau 3.
Le procédé de mesure consiste :
- à raccorder le connecteur de liaison 18 du capteur thermosensible 10 à une carte électronique de régulation 11,
- à déterminer la température d'eau moyenne stockée dans la cuve 2 du chauffe-eau 3 ou ballon de stockage,
- à calculer la quantité d'eau chaude restante dans la cuve 2 du chauffe-eau 3 ou ballon de stockage,
- à détecter les sous-tirages d'eau à l'intérieur de la cuve 2 du chauffe-eau 3 ou ballon de stockage.
- Et à déterminer un profil d'utilisation ou de consommation de l'eau chaude.

De plus, le procédé de mesure consiste, lorsque les éléments thermosensibles 16 sont montés électriquement en parallèle ou en série et raccordés par le connecteur de liaison 18 à la carte électronique de régulation 11, à réaliser une lecture de la valeur moyenne d'une résistance formée par l'ensemble des éléments thermosensibles 16.

Enfin le procédé de mesure consiste, lorsque les éléments thermosensibles 16 sont montés électriquement de façon indépendante et raccordés par la connecteur de liaison 18 à la carte électronique de régulation 11, à réaliser une lecture ponctuelle de chaque élément thermosensible 16 afin de renseigner l'électronique de régulation 11 associée.

Il doit d'ailleurs être entendu que la description qui précède n'a été donnée qu'a titre d'exemple et qu'elle ne limite nullement le domaine de l'invention dont on ne sortirait pas en remplaçant les détails d'exécution décrits par tous autres équivalents.

## Revendications

1. Dispositif de détection pour mesurer la quantité d'eau chaude restante à l'intérieur d'un ballon de stockage et plus particulièrement à l'intérieur d'une cuve (2) d'un chauffe-eau (3), **caractérisé en ce qu'**il comprend un capteur thermosensible (10) qui est constitué d'un circuit électrique souple (15) recevant sur l'une de ses faces des éléments thermosensibles (16) raccordés par l'intermédiaire de fils ou pistes électriques (17) à un connecteur de liaison (18), et d'une résine isolante et étanche (19) enveloppant lesdits éléments thermosensibles (16) et lesdits fils électriques (17).

2. Dispositif de détection suivant la revendication 1, **caractérisé en ce qu'**il comprend un capteur thermosensible (10) qui est constitué d'un circuit électrique souple (15) recevant sur l'une de ses faces des éléments thermosensibles (16) raccordés par l'intermédiaire de fils ou pistes électriques (17) à un connecteur de liaison (18), et d'une résine isolante et étanche (19) enveloppant lesdits éléments thermosensibles (16) et lesdits fils ou pistes électriques (17), ledit connecteur de liaison (18) du capteur thermosensible (10) étant raccordé à une carte électronique de régulation (11).

3. Dispositif de détection suivant la revendication 1, **caractérisé en ce que** les éléments thermosensibles (16) sont des éléments à coefficient de température négatif (CTN) ou à coefficient de température positif (CTP) dont la résistance ohmique varie en fonction de la température régnant à l'intérieur de la cuve (2) du chauffe-eau (3) ou ballon de stockage.

4. Dispositif de détection suivant la revendication 1, **caractérisé en ce que** les éléments thermosensibles (16) sont agencés et raccordés par les fils ou pistes électriques (17) au connecteur de liaison (18), suivant un montage en parallèle.

5. Dispositif de détection suivant la revendication 1, **caractérisé en ce que** les éléments thermosensibles (16) sont agencés et raccordés par les fils ou pistes électriques (17) au connecteur de liaison (18), suivant un montage indépendant.

6. Dispositif de détection suivant la revendication 1, **caractérisé en ce que** les éléments thermosensibles (16) sont agencés et raccordés par les fils ou pistes électriques (17) au connecteur de liaison (18), suivant un montage en série.

7. Dispositif de détection suivant la revendication 1, **caractérisé en ce que** le nombre d'éléments thermosensibles (16) répartis sur le circuit électrique souple (15) est fonction de la hauteur de la cuve (2) du chauffe-eau (3) ou ballon de stockage.

8. Dispositif de détection suivant la revendication 1, **caractérisé en ce que** le circuit électrique souple (15) du capteur thermosensible (10) comporte sur son autre face, opposée à celle recevant les éléments thermosensibles (16) et les fils de connexion ou pistes électriques (17), un film autocollant (20) permettant la fixation du capteur thermosensible (10).

9. Dispositif de détection suivant la revendication 1, **caractérisé en ce que** le capteur thermosensible (10) est placé à l'extérieur de la cuve (2), et collé contre et sur toute la hauteur de la face externe et verticale (14) de ladite cuve de manière à être noyé dans l'isolant thermique (5).

10. Dispositif de détection suivant la revendication 1, **caractérisé en ce que** le capteur thermosensible (10) est placé à l'extérieur de la cuve (2) et à l'intérieur d'un tube vertical (12) disposé contre la face externe de ladite cuve.

11. Dispositif de détection suivant la revendication 1, **caractérisé en ce que** le capteur thermosensible (10) peut être placé à l'intérieur de la cuve (2) au moyen d'un tube vertical (13) étanche et traversant ladite cuve.

12. Dispositif de détection suivant la revendication 1, **caractérisé en ce que** le capteur thermosensible (10) est collé sur une bande d'acier ou feuillard (22) assurant une certaine rigidité ou raideur au dit capteur.

13. Procédé de mesure de la quantité d'eau chaude restante à l'intérieur d'un ballon de stockage et plus particulièrement à l'intérieur d'une cuve (2) d'un chauffe-eau (3) suivant la revendication 1, **caractérisé en ce qu'**il consiste :
• à raccorder le connecteur de liaison (18) du capteur thermosensible (10) à une carte électronique de régulation (11),
• à déterminer la température d'eau moyenne stockée dans la cuve (2) du chauffe-eau (3) ou ballon de stockage,
• à calculer la quantité d'eau chaude restante dans la cuve (2) du chauffe-eau (3) ou ballon de stockage,
• à détecter les sous-tirages d'eau à l'intérieur de la cuve (2) du chauffe-eau (3) ou ballon de stockage.
• Et à déterminer un profil d'utilisation ou de consommation de l'eau chaude.

14. Procédé de mesure de la quantité d'eau chaude restante à l'intérieur d'un ballon de stockage et plus particulièrement à l'intérieur d'une cuve (2) d'un chauffe-eau (3) suivant la revendication 1, **caractérisé en ce qu'**il consiste, lorsque les éléments thermosensibles (16) sont montés électriquement en parallèle ou en série et raccordés par le connecteur de liaison (18) à la carte électronique de régulation (11), à réaliser une lecture de la valeur moyenne d'une résistance formée par l'ensemble des éléments thermosensibles (16).

15. Procédé de mesure de la quantité d'eau chaude restante à l'intérieur d'un ballon de stockage et plus particulièrement à l'intérieur d'une cuve (2) d'un chauffe-eau (3) suivant la revendication 1, **caractérisé en ce qu'**il consiste, lorsque les éléments thermosensibles (16) sont montés électriquement de façon indépendante et raccordés par la connecteur de liaison (18) à la carte électronique de régulation (11), à réaliser une lecture ponctuelle de chaque élément thermosensible (16) afin de renseigner l'électronique de régulation (11) associée.
